# EUROPEAN PATENT SPECIFICATION

(11) **EP 3 020 961 B1**
(45) Date of publication and mention of the grant of the patent: **08.11.2017**
(21) Application number: 15174556.9
(22) Date of filing: 30.06.2015
(51) Int. Cl.: F03D 7/04, F03D 80/70, F03D 17/00

(54) **METHOD OF OPERATING A WIND TURBINE GENERATOR**
VERFAHREN ZUM BETRIEB EINES WINDTURBINENGENERATORS
PROCÉDÉ DE FONCTIONNEMENT D'UN GÉNÉRATEUR DE TURBINE ÉOLIENNE

(30) Priority: 17.11.2014 JP 2014233102
(43) Date of publication of application: 18.05.2016
(73) Proprietor: MITSUBISHI HEAVY INDUSTRIES, LTD., Tokyo 108-8215 (JP)
(72) Inventor: TSUTSUMI, Kazuhisa, TOKYO, 108-8215 (JP)
(74) Representative: Intès, Didier Gérard André

(56) References cited:
- EP-A1- 2 270 342
- AU-A1- 2008 331 352
- CN-U- 202 789 852
- JP-A- 2014 129 771

## Description

### TECHNICAL FIELD

The present disclosure relates to a method of operating a wind turbine generator.

### BACKGROUND

A renewable-energy type power generating apparatus has become increasingly popular in recent years in view of preservation of the global environment. A renewable-energy type power generating apparatus includes a wind turbine generator utilizing wind energy, and power generating apparatuses utilizing tidal current, ocean current or river current. As a renewable-energy type power generating apparatus, known is one including blades for receiving renewable energy, a hub to which the blades are mounted, a main shaft coupled to the hub, and a generator for converting rotation energy of the main shaft into electric power. Further, a known renewable-energy type power generating apparatus is equipped with a drivetrain for transmitting rotation energy of a rotor including blades and a hub to a generator, such as a mechanical-type (gear-type) speed increasing unit disposed between the rotor and the generator and a hydraulic transmission in which a hydraulic pump and a hydraulic motor are combined.

For instance, Patent Document 1 discloses a wind turbine generator equipped with a hydraulic pump and a hydraulic motor as a drivetrain. In this wind turbine generator, the hydraulic pump is driven by the hub so as to generate pressurized oil, which drives the hydraulic motor. Then, a generator coupled to the hydraulic motor converts rotation energy inputted from the hydraulic motor into electrical energy, thereby generating electric power.

### Citation List

### Patent Literature

Patent Document 1: US2010/0032959

EP 2 270 342 discloses an example of a wind turbine comprising a leakage detection system.

### SUMMARY

Meanwhile, a renewable-energy type power generating apparatus equipped with a mechanical-type speed increasing unit or a hydraulic transmission includes oil-using units which use oil as lubricant oil or hydraulic working oil. In such a renewable-energy type power generating apparatus, oil may unintentionally leak out due to damage or the like of the oil-using units or piping. Such oil leakage may lead to troubles of the oil using units or contamination of the natural environment.

In view of this, it is required to detect unintended oil leakage in a wind turbine generator and to take a suitable measure to prevent further oil leakage.

In this regard, there is no disclosure in Patent Document 1 for detecting unintended oil leakage and taking a suitable measure.

In view of the above issues, an object of a preferred embodiment of the present invention is to provide a method of operating a wind turbine generator and a wind turbine generator, according to independent claims 1 and 12, whereby it is possible to detect oil leakage and to prevent further oil leakage.
(1) A method of operating a wind turbine generator according to at least one embodiment of the present invention is for a wind turbine generator which includes: a wind turbine rotor including a hub having a blade mounted to the hub; a generator configured to be driven by rotation energy of the wind turbine rotor; a drivetrain for transmitting the rotation energy of the wind turbine rotor to the generator, the drivetrain including at least one oil using unit; a storage tank for storing oil supplied to the oil using unit; and a circulation line through which oil circulated between the storage tank and the oil using unit flows. The method includes: an oil-leakage determination step of determining whether oil leakage from the oil using unit has occurred, using the first oil-leakage determination condition including both of following conditions (a) and (b); a wind-turbine stop step of stopping the wind turbine generator if it is determined that the oil leakage has occurred in the oil-leakage determination step; and an auxiliary-machine stop step of stopping an auxiliary machine of the wind turbine generator if it is determined that the oil leakage has occurred in the oil-leakage determination step. In the oil-leakage determination step, determination of condition satisfaction is carried out for each of conditions (a) and (b), and then it is determined that the oil leakage from the oil using unit has occurred if any one of the following condition (a) or (b) is not satisfied.
   Condition (a): a fluid level of the oil in the storage tank is greater than a threshold value.
   Condition (b): a pressure in the circulation line is greater than a threshold value, or a pressure in the oil using unit is greater than a threshold value.
   In the above configuration (1), in the oil-leakage determination step, oil leakage is detected based on a pressure in the circulation line through which the oil circulates or a pressure in the oil using unit (condition (b)) and based on the fluid level in the storage tank storing the oil (condition (a)).
   If there is relatively rapid oil leakage having occurred, an influence of the oil leakage appears as a pressure change in the circulation line or the oil using unit. That is, due to the influence of the rapid oil leakage, the pressure in the circulation line or the oil using unit becomes lower than a pressure predicted from the operation state of the oil using unit. Thus, it is possible to detect relatively rapid oil leakage by monitoring a pressure decrease in the circulation line or the oil using unit using the condition (b).
   On the other hand, if the oil leakage is relatively slow, the magnitude of a pressure decrease in the circulation line or the oil using unit is small, and thus it may be impossible to detect the oil leakage with an adequate accuracy even if the pressure decrease in the circulation line or the oil using unit is monitored using the above condition (b). In view of this, as in the above configuration (1), the condition (a) is used in addition to the condition (b) to also monitor the decrease in the fluid level in the storage tank. If there is oil leakage in the oil using unit, the fluid level in the storage tank becomes gradually lower than a fluid level predicted from the operation state of the oil using unit, which make it possible to detect relatively slow oil leakage by monitoring a fluid level using the condition (a).
   It takes some time before the influence of oil leakage appears as a change in the fluid level in the storage tank. Thus, in a case of rapid oil leakage, using the condition (a) alone may cause a considerable volume of oil leakage before detection of the oil leakage. In contrast, the pressure in the circulation line changes relatively quickly in response to occurrence of oil leakage. In view of this, in the above configuration (1), the condition (b) is used in addition to the condition (a) to monitor the pressure decrease in the circulation line or the oil using unit.
   Accordingly, in the above configuration (1), using two types of conditions: the condition (a) based on the fluid level in the storage tank; and the condition (b) based on the pressure in the circulation line or the oil using unit, oil leakage is determined to have happened when any one of the conditions is not satisfied. In this way, it is possible to detect oil leakage securely and quickly.
   Further, in the above configuration (1), the wind turbine generator and the auxiliary machine of the wind turbine generator are stopped if it is determined that the oil leakage has occurred, which makes it possible to prevent further oil leakage when oil leakage has occurred.
(2) In some embodiments, particularly in the above configuration (1), in the oil-leakage determination step, using the first oil-leakage determination condition which further include a following condition (c), it is determined that the oil leakage from the oil using unit has occurred if any one of the condition (a), (b), or (c) is not satisfied.
   Condition (c): an oil-leakage detection signal is not outputted from an oil-leakage detection sensor disposed on the wind turbine generator.
   In the above configuration (2), it is determined that the oil leakage has occurred if any one of the conditions is not satisfied, using the condition (c) in which the oil leakage is detected using the oil-leakage detection sensor in addition to the conditions (a) and (b) as an oil-leakage determination condition. Thus, it is possible to detect oil leakage securely and quickly.
(3) In some embodiments, particularly in the above configuration (2), the wind turbine generator further includes an oil pan configured to receive leakage oil which has leaked from the oil using unit, and the oil-leakage detection sensor is configured to detect the leakage oil received by the oil pan.
   With the above configuration (3), it is possible to detect oil leakage easily by detecting the leakage oil received by the oil pan using the oil-leakage detection sensor.
(4) In some embodiments, particularly in the above configuration (2) or (3), in the oil-leakage determination step, whether an abnormality of the oil-leakage detection sensor is present is determined, and when the abnormality of the oil-leakage detection sensor is detected, it is determined that the oil leakage from the oil using unit has not occurred if both of the conditions (a) and (b) are satisfied, even if the condition (c) of the first oil-leakage determination condition is not satisfied.
   With the above configuration (4), in the oil-leakage determination step, it is not determined that the oil leakage from the oil using unit has occurred based on the condition (c) if an abnormality of the oil-leakage detection sensor is detected, even of oil leakage is detected by the oil-leakage detection sensor based on the condition (c).
   In this way, it is possible no to shut down the wind turbine generator and the auxiliary machine when oil leakage is detected wrongly by the oil-leakage detection sensor having an abnormality, which enables stable operation of the wind turbine generator.
(5) In some embodiments, particularly in one of the above configurations (1) to (4), the drivetrain includes a main shaft connected to the hub of the wind turbine rotor, and a transmission disposed between the main shaft and the generator. The oil using unit includes the transmission, the circulation line includes an oil-supply line through which the oil supplied to the transmission from the storage tank flows, and the auxiliary machine includes an oil-supply pump for supplying the oil to the transmission from the storage tank, the oil-supply pump being disposed in the oil-supply line.
   With the above configuration (5), in a case where the drivetrain includes a transmission, it is possible to detect oil leakage which occurs in the transmission based on the fluid level in the storage tank and the pressure in the oil-supply line through which the oil supplied from the storage tank to the transmission flows. Further, if it is determined that oil leakage has occurred in the transmission, the oil-supply pump for supplying oil from the storage tank to the transmission is stopped, which makes it possible to stop oil supply to the transmission and to prevent further oil leakage.
(6) In some embodiments, particularly in the above configuration (5), the transmission is a mechanical-type speed increasing unit which includes a speed-increasing gear for increasing a rotation speed of the main shaft and outputting the rotation to the generator, and a casing for housing the speed-increasing gear. The storage tank is formed inside the casing. The circulation line is disposed outside the casing. The auxiliary machine includes an oil-supply pump for supplying the oil stored in the storage tank in the casing to the speed-increasing gear in the casing via the circulation line. In the oil-leakage determination step, as the condition (b), a condition that a pressure at a downstream side of the oil-supply pump in the circulation line is greater than a threshold value is used.
   With the above configuration (6), in a case where the transmission is a mechanical-type speed increasing unit, it is possible to detect oil leakage which occurs in the mechanical-type speed increasing unit based on the fluid level in the storage tank and the pressure of the circulation line at the downstream side of the oil-supply pump for supplying oil to the mechanical-type speed increasing unit. Further, if it is determined that oil leakage has occurred in the mechanical-type speed increasing unit, the oil-supply pump for supplying oil from the storage tank to the mechanical-type speed increasing unit is stopped, which makes it possible to stop oil supply to the mechanical-type speed increasing unit and to prevent further oil leakage.
(7) In some embodiments, particularly in the above configuration (5), the transmission includes: a hydraulic pump configured to be driven by the main shaft to pressurize working oil to produce pressurized oil; a hydraulic motor configured to be driven by the pressurized oil produced by the hydraulic pump; a high pressure line connecting an outlet side of the hydraulic pump and an inlet side of the hydraulic motor; and a low pressure line connecting an outlet side of the hydraulic motor and an inlet side of the hydraulic pump. The auxiliary machine includes a boost pump for supplying the oil to the low pressure line of the transmission from the storage tank. In the oil-leakage determination step, as the condition (b), a condition that a pressure in the high pressure line is greater than a first threshold value and a pressure in the low pressure line is greater than a second threshold value is used.
   With the above configuration (7), in a case where the transmission is a hydraulic transmission including the hydraulic pump, the hydraulic motor, a high pressure line and a low pressure line, it is possible to detect oil leakage which occurs in the hydraulic transmission based on the fluid level in the storage tank and the pressure in the high pressure line and the low pressure line. Further, if it is determined that oil leakage has occurred in the hydraulic transmission, the boost pump for supplying oil from the storage tank to the hydraulic transmission is stopped, which makes it possible to stop oil supply to the hydraulic transmission and to prevent further oil leakage.
(8) In some embodiments, particularly in the above configuration (7), the transmission further includes a bypass line for causing the oil in the high pressure line to flow to the low pressure line without passing through the hydraulic motor. The method further includes: an oil-temperature increasing step of increasing a temperature of the oil to a predetermined value or higher by operating the hydraulic pump to circulate the oil in a circulation path which includes the high pressure line, the bypass line and the low pressure line; and a step of detecting the fluid level of the oil after a temperature rise in the storage tank, while the hydraulic pump is stopped so that the oil is not circulated among the hydraulic pump, the hydraulic motor, the high pressure line and the low pressure line, after the oil-temperature increasing step.
   In the oil-leakage determination step, as the condition (a), a condition that a fluid level of the oil in the storage tank during operation of the wind turbine generator is higher than a threshold value L1 determined with reference to the fluid level of the oil detected after the temperature rise is used.
   During operation of the hydraulic transmission, the temperature of the oil (working oil) in the hydraulic transmission rises due to thermal energy caused by mechanical slide in the hydraulic machine, the pressure decrease upon passage of the working oil through the valve, or the like. Further, the volume of the oil rises with an increase in the temperature. Thus, if a threshold value is set at a fluid level lower than the fluid level in the storage tank of oil having a low temperature (e.g. before operation of the wind turbine generator is started) in the condition (a), oil leakage cannot be detected using the condition (a) until the volume of the leakage oil reaches the volume that has increased due to a temperature rise during operation of the wind turbine generator.
   In this regard, in the above configuration (8), it is possible to detect oil leakage more appropriately, because the threshold value being used is determined with reference to the fluid level in the storage tank while the oil has been heated to a temperature close to, for instance, the temperature during operation of the wind turbine generator.
(9) In some embodiments, particularly in one of the above configurations (1) to (8), if it is determined that the oil leakage has occurred according to the first oil-leakage determination condition in the oil-leakage determination step, the auxiliary-machine stop step is executed after a rotation speed of the main shaft of the wind turbine generator or of a generator shaft has decreased to a threshold value or less by executing the wind-turbine stop step.
   With the above configuration (9), the auxiliary machine is stopped while the rotation speed of the main shaft of the wind turbine generator or of the generator shaft has fallen to the threshold value or less by stopping the wind turbine generator. Thus, it is possible to supply the oil in the storage tank to the oil using unit with the auxiliary machine until the rotation speed of the main shaft or of the generator shaft falls to the threshold value. Thus, it is possible to protect the oil using unit from damage or the like due to lack of oil supply.
(10) In some embodiments, particularly in one of the above configurations (1) to (9), in the oil-leakage determination step, a second oil-leakage condition including a following condition (d) is used in addition to the first oil-leakage determination condition to determine that the oil leakage from the oil using unit has occurred if the condition (d) is not satisfied. If it is determined that the oil leakage has occurred according to the first oil-leakage determination condition in the oil-leakage determination step, the auxiliary-machine stop step is executed after the rotation speed of the main shaft of the wind turbine generator or the generator shaft has decreased to a threshold value or less by executing the wind-turbine stop step. If it is determined that the oil leakage has occurred according to the second oil-leakage determination condition in the oil-leakage determination step, the auxiliary-machine stop step is executed with the wind-turbine stop step regardless of the rotation speed.
   Condition (d): the fluid level of the oil in the storage tank is greater than a threshold value L2 (L1> L2, where L1 is the threshold value of the fluid level in the condition (a) of the first oil-leakage determination condition).
   With the above configuration (10), the auxiliary machine is stopped without waiting for the rotation speed of the main shaft or the generator shaft to decrease, if the fluid level has fallen under the threshold value using the threshold value set at a fluid level lower than that set in the condition (a). In this case, the oil is no longer supplied from the auxiliary machine to the oil using unit due to the shutdown of the auxiliary machine, which makes it possible to reduce oil leakage after shutdown of the wind turbine generator.
(11) In some embodiments, particularly in one of the above configurations (1) to (10), in the wind-turbine stop step, a pitch angle of the blade is controlled so that the blade is feathered.
(12) In some embodiments, particularly in one of the above configurations (1) to (11), in the wind-turbine stop step, at least one of the drivetrain or the generator is controlled to stop conversion of the rotation energy into electrical energy.
(13) A wind turbine generator according to at least one embodiment of the present invention includes: a wind turbine rotor including a hub having a blade mounted to the hub; a generator configured to be driven by rotation energy of the wind turbine rotor; a drivetrain for transmitting the rotation energy of the wind turbine rotor to the generator, the drivetrain including at least one oil using unit; a storage tank for storing oil supplied to the oil using unit; a circulation line through which oil circulated between the storage tank and the oil using unit flows, and an oil-leakage detection part for detecting oil leakage from the oil using unit. The oil-leakage detection part is configured to: determine whether the oil leakage from the oil using unit has occurred, using the first oil-leakage determination condition including both of following conditions (a) and (b); and stop the wind turbine generator and an auxiliary machine of the wind turbine generator if it is determined that the oil leakage from the oil using unit has occurred. The oil-leakage detection part is configured to carry out, for each of conditions (a) and (b), determination of condition satisfaction, and then determines that the oil leakage from the oil using unit has occurred if any one of the condition (a) or (b) is not satisfied.

Condition (a): a fluid level of the oil in the storage tank is greater than a threshold value.

Condition (b): a pressure in the circulation line is greater than a threshold value, or a pressure in the oil using unit is greater than a threshold value.

In the above configuration (13), using the two conditions, the condition (a) based on the fluid level of the storage tank and the condition (b) based on the pressure in the circulation line or the oil using unit, oil leakage is determined to have happened when any one of the conditions is not satisfied. In this way, it is possible to detect oil leakage securely and quickly.

Further, in the above configuration (13), the wind turbine generator and the auxiliary machine of the wind turbine generator are stopped if it is determined that the oil leakage has occurred, which makes it possible to prevent further oil leakage when oil leakage has occurred.

According to at least one embodiment of the present invention, provided is an operation method of a wind turbine generator whereby it is possible to detect oil leakage and to prevent further oil leakage.

### BRIEF DESCRIPTION OF DRAWINGS

FIG. 1 is a schematic diagram of an overall configuration of a wind turbine generator according to one embodiment.
FIGs. 2 and 3 are each a schematic diagram of a configuration of a transmission according to one embodiment.
FIG. 4 is a schematic flowchart of a method of operating a wind turbine generator according to one embodiment.
FIGs. 5 to 7 are each a flowchart of an oil-leakage determination step according to one embodiment.
FIG. 8 is a flowchart of a method of setting a threshold value according to one embodiment.
FIGs. 9 and 10 are each a flowchart of a wind-turbine stop step and an auxiliary-machine stop step according to one embodiment.
FIG. 11 is a flowchart of a method of operating a wind turbine generator according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

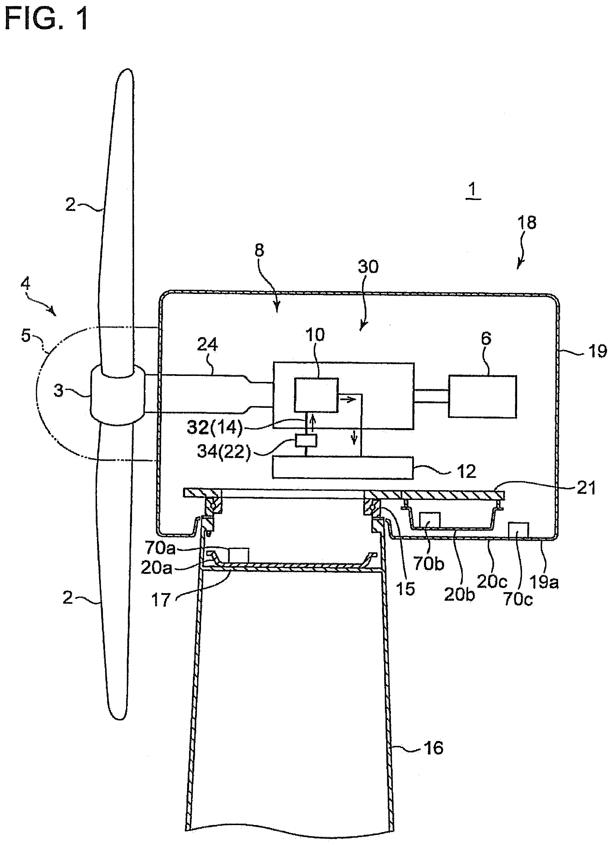

First, with reference to FIG. 1, a wind turbine generator to which a method of operating a wind turbine generator according to one embodiment is applied will be described.

FIG. 1 is a schematic diagram of an overall configuration of a wind turbine generator according to one embodiment. As illustrated in the drawing, a wind turbine generator 1 includes a wind turbine rotor 4 including a hub 3 to which blades 2 are mounted, a generator 6, and a drivetrain 8 for transmitting rotation energy of the wind turbine rotor 4 to the generator 6. The generator 6 is configured to be driven by rotation energy of the wind turbine rotor 4 transmitted by the drivetrain 8. The drivetrain 8 includes an oil using unit 10 described below. Here, the hub 3 may be covered by a hub cover 5. The wind turbine generator 1 includes a storage tank 12 for storing oil which is to be supplied to the oil using unit 10, and a circulation line 14 through which oil flows to be circulated between the storage tank 12 and the oil using unit 10. Further, the wind turbine generator 1 includes an auxiliary machine 22 for assisting operation of a constituent device (e.g. the drivetrain 8) of the wind turbine generator 1.

The drivetrain 8 including the oil using unit 10, and the generator 6 may be housed inside a nacelle 18 supported by a tower 16. The tower 16 may be erected on a base disposed on the water or on the ground. Further, the wind turbine generator 1 may include a yaw rotation bearing 15 which supports the nacelle 18 to the tower 16 rotatably.

In one embodiment, the wind turbine generator 1 further includes an oil pan 20 configured to receive leakage oil that has leaked out from the oil using unit 10. Receiving the leakage oil with the oil pan 20a-20c makes it possible to restrict outflow of the leakage oil to the outside of the wind turbine generator 1.

In some embodiments, the oil pan may include an oil pan 20a disposed at an upper part of the tower 16 and below the nacelle 18. The oil pan 20a may be disposed on a floor 17 disposed inside the tower 16.

In some embodiments, the oil pan may include an oil pan 20b disposed in the interior space of the nacelle 18. The oil pan 20b may be, for instance, supported by a nacelle base plate 21 constituting the nacelle 18 or by a frame (not illustrated) mounted to the nacelle base plate 21.

In some embodiments, the oil pan may be formed by at least a part of a bottom part 19a of a nacelle cover 19 which constitutes the nacelle 18.

With the above oil pan 20a-20c, it is possible to receive the leakage oil from the oil using unit 10 disposed above the tower 16, at a rear part of the nacelle 18, etc.

In one embodiment, the drivetrain 8 includes a main shaft 24 connected to the hub 3 of the wind turbine rotor 4 and a transmission 30 disposed between the main shaft 24 and the generator 6.

In this case, the oil using unit 10 may be the transmission 30. Further, the circulation line 14 may include an oil-supply line 32 through which oil flows to be supplied to the transmission 30 being the oil using unit 10 from the storage tank 12. Further, the auxiliary machine 22 may include an oil-supply pump 34 for supplying oil to the transmission 30 from the storage tank 12, disposed in the oil-supply line 32.

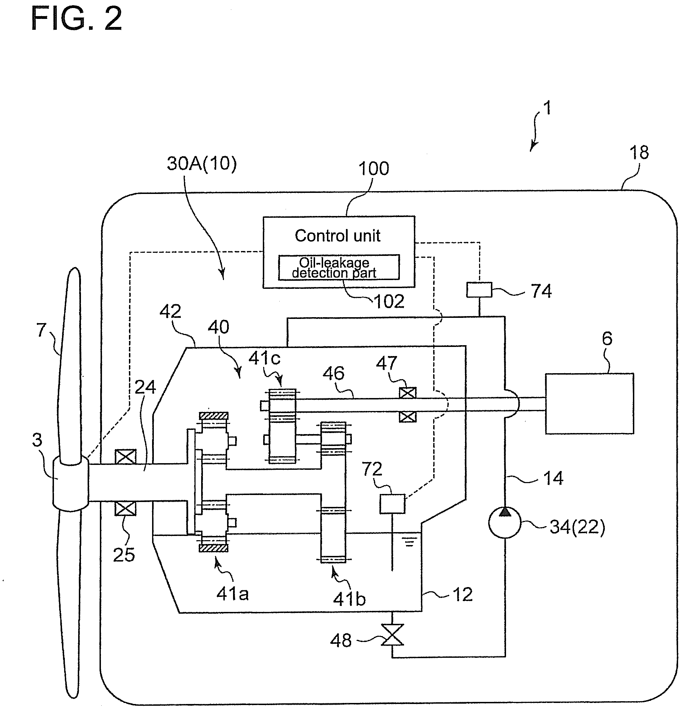

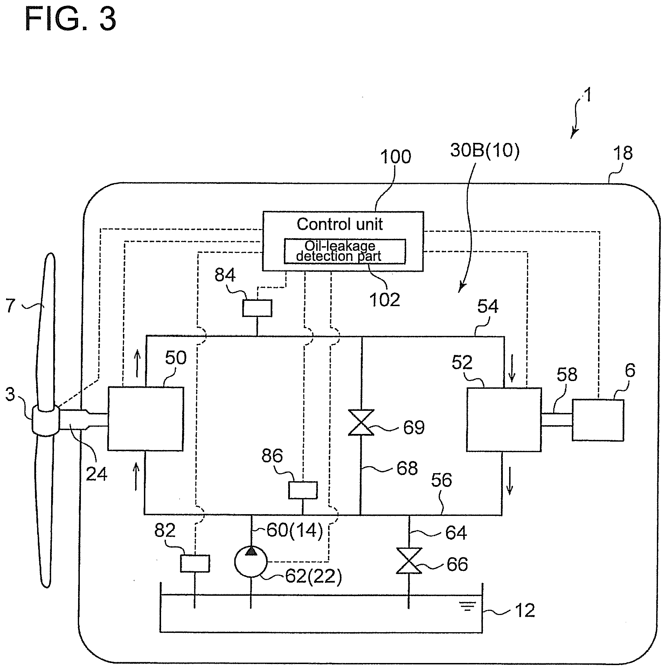

Here, with reference to FIGs. 2 and 3, the configuration of the transmission 30 according to some embodiments will be described in more detail. FIGs. 2 and 3 are each a schematic diagram of a configuration of a transmission according to one embodiment.

The transmission 30 included in the wind turbine generator 1 illustrated in FIG. 1 is a mechanical-type speed increasing unit 30A for increasing the rotation speed of the main shaft 24 and outputting the rotation to the generator 6. The mechanical-type speed increasing unit 30A includes a speed-increasing gear 40 and a casing 42 for housing the speed-increasing gear 40. The speed-increasing gear 40 is configured to increase the rotation speed of the main shaft 24 and output the rotation to the generator 6. Here, the speed-increasing gear 40 and the generator 6 may be connected via a rotation shaft 46, and the rotation whose speed has been increased by the speed-increasing gear 40 may be inputted into the generator 6 via the rotation shaft 46. The main shaft 24 may be supported rotatably by a main bearing 25, and the rotation shaft 46 may be supported rotatably by a bearing 47.

In the embodiment illustrated in FIG. 2, the speed-increasing gear 40 has a configuration in which multistage speed-increasing mechanisms 41a to 41c are combined, and is configured to increase the rotation speed of the main shaft 24 serving as an input shaft, which is the rotation speed of the wind turbine rotor 4, with the multistage speed-increasing mechanisms 41a to 41c, so as to increase the rotation speed to an output rotation speed of the output shaft (rotation shaft 46).

In the wind turbine generator 1 illustrated in FIG. 2, the storage tank 12 is formed inside a casing 42 by a part surrounded by a bottom section and side sections of the casing 42. The storage tank 12 stores, for instance, lubricant oil for lubricating the speed-increasing gear 40. Further, in the wind turbine generator 1 illustrated in FIG. 2, the circulation line 14 is disposed outside the casing 42, connecting the bottom section of the storage tank 12, which is the bottom section of the casing 42, and the top section of the casing 42. The oil-supply pump 34 is disposed in the circulation line 14 and configured to supply the oil stored in the storage tank 12 to the speed-increasing gear 40 inside the casing 42 via the circulation line 14. Specifically, the mechanical-type speed increasing unit 30A is the oil using unit 10 using the oil stored in the storage tank 12, and the oil-supply pump 34 is the auxiliary machine 22 assisting operation of the mechanical-type speed increasing unit 30A. Further, a valve 48 is disposed in the circulation line 14 at the upstream side of the oil-supply pump 34, so that the intake flow rate of the oil to the oil-supply pump 34 is adjustable.

In one embodiment, the storage tank 12 may include a level meter 72 for measuring a fluid level of the working oil in the storage tank 12. Further, in one embodiment, a pressure sensor 74 for measuring a pressure in the circulation line 14 may be disposed in the circulation line 14.

The transmission 30 included in the wind turbine generator 1 illustrated in FIG. 3 is a hydraulic transmission 30B including a hydraulic pump and a hydraulic motor. The hydraulic transmission 30B includes a hydraulic pump 50 mounted to the main shaft 24, and a hydraulic motor 52 connected to the hydraulic pump 50 via a high pressure line 54 and a low pressure line 56. The high pressure line 54 connects an outlet side of the hydraulic pump 50 and an inlet side of the hydraulic motor 52, while the low pressure line 56 connects an outlet side of the hydraulic motor 52 and an inlet side of the hydraulic pump 50. Further, the working oil circulates in the circulation line 14 including the high pressure line 54 and the low pressure line 56 via the hydraulic pump 50 and the hydraulic motor 52.

When the blade 7 receives wind and the hub 3 rotates, the main shaft 24 coupled to the hub 3 also rotates. The hydraulic pump 50 pressurizes the working oil by being driven by the main shaft 24, thereby generating high pressure working oil (pressurized oil). The pressurized oil generated in the hydraulic pump 50 is supplied to the hydraulic motor 52 via the high pressure line 54, and then the hydraulic motor 52 is driven by this pressurized oil. The low pressure working oil having performed work in the hydraulic motor 52 is returned again to the hydraulic pump 50 via the low pressure line 56. Further, rotation of the hydraulic motor 52 is inputted into the generator 6 via the rotation shaft 58. The number of the hydraulic pump 50, the hydraulic motor 52 and the generator 6 is not particularly limited, and it is sufficient if there is at least one each.

In the wind turbine generator 1 illustrated in FIG. 3, the storage tank 12 stores working oil supplied to the hydraulic transmission 30B. Further, a supplementary line 60 and a return line 64 branched from the low pressure line are disposed between the storage tank 12 and the low pressure line 56.

A boost pump 62 is disposed in the supplementary line 60, so that the working oil stored in the storage tank 12 is pumped up by the boost pump 62 to be supplied to the low pressure line 56 (the hydraulic transmission 30B) via the supplementary line 60. Replenishing the low pressure line 56 with the working oil as described above makes it possible to maintain the volume of working oil circulating in the hydraulic transmission 30B even if there is leakage of the working oil. That is, in the wind turbine generator 1 including the hydraulic transmission 30B, the hydraulic transmission 30B is the oil using unit 10 using the oil stored in the storage tank 12 and the boost pump 62 is the auxiliary machine 22 assisting operation of the hydraulic transmission 30B.

Further, a relief valve 66 is disposed in the return line 64 so as to keep a pressure in the low pressure line 56 close to a setting pressure of the relief valve 66.

In one embodiment, the storage tank 12 may include a level meter 82 for measuring a fluid level of the working oil in the storage tank 12. Further, in one embodiment, a pressure sensor 84 for measuring a pressure in the high pressure line 54 may be disposed in the high pressure line 54, and a pressure sensor 86 for measuring a pressure in the low pressure line 56 may be disposed in the low pressure line 56.

In some embodiments, as illustrated in FIG. 3, the hydraulic transmission 30B may further include a bypass line 68 which connects the high pressure line 54 and the low pressure line 56. The bypass line 68 is a flow path for causing the working oil in the high pressure line 54 to flow to the low pressure line 56 without passing through the hydraulic motor 52. A valve 69 configured to be capable of switching a communication state between the high pressure line 54 and the low pressure line 56 via the bypass line 68 is disposed in the bypass line 68. The valve 69 is closed during normal operation of the hydraulic transmission 30B to shut off the flow of the working oil from the high pressure line 54 to the low pressure line 56 via the bypass line, so that the pressurized oil from the hydraulic pump 50 flows to the hydraulic motor 52 via the high pressure line 54. The valve 69 may be opened when needed so as to allow a flow of the working oil to the low pressure line 56 from the high pressure line 54 via the bypass line.

In some embodiments, as illustrated in FIGs. 2 and 3, the wind turbine generator 1 may include an oil-leakage detection part 102 which detects oil leakage from the oil using unit 10. In some embodiments, the oil-leakage detection part 102 may be included in a control unit 100 for controlling the wind turbine generator 1.

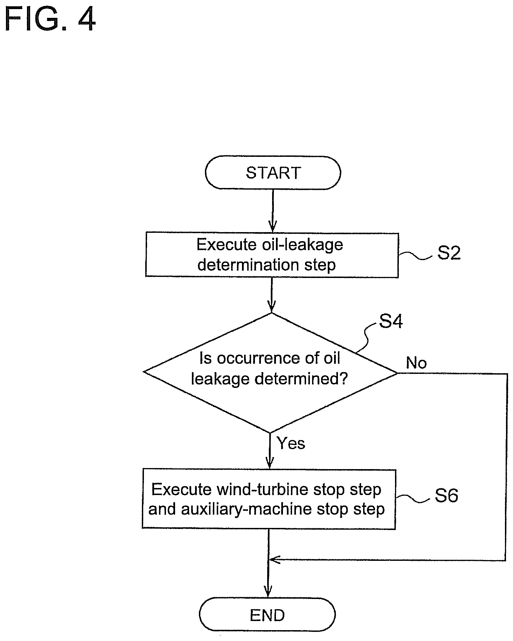

Next, with reference to FIGs. 4 to 11, a method of operating a wind turbine generator according to one embodiment will be described. Here, the method of operating a wind turbine generator according to the following embodiment is applied to the above described wind turbine generator 1.

FIG. 4 is a schematic flowchart of a method of operating a wind turbine generator according to one embodiment.

As illustrated in FIG. 4, in the method of operating a wind turbine generator according to one embodiment, an oil-leakage determination step is executed at first to determine whether oil leakage from the oil using unit 10 has occurred (S2).

If it is determined that oil leakage has occurred in the oil-leakage determination step S2 (Yes in S4), a wind-turbine stop step and an auxiliary-machine stop step are executed to stop the wind turbine generator 1 and the auxiliary machine 22 (S6).

In contrast, if it is determined that oil-leakage has not occurred in the oil-leakage determination step S2 (No in S4), the operation method is terminated without taking any further action.

In S6, the wind-turbine stop step of stopping the wind turbine generator 1 and the auxiliary-machine stop step of stopping the auxiliary machine 22 may be executed at the same time. Alternatively, the wind-turbine stop step or the auxiliary-machine stop step may be executed first, and then the other step may be executed.

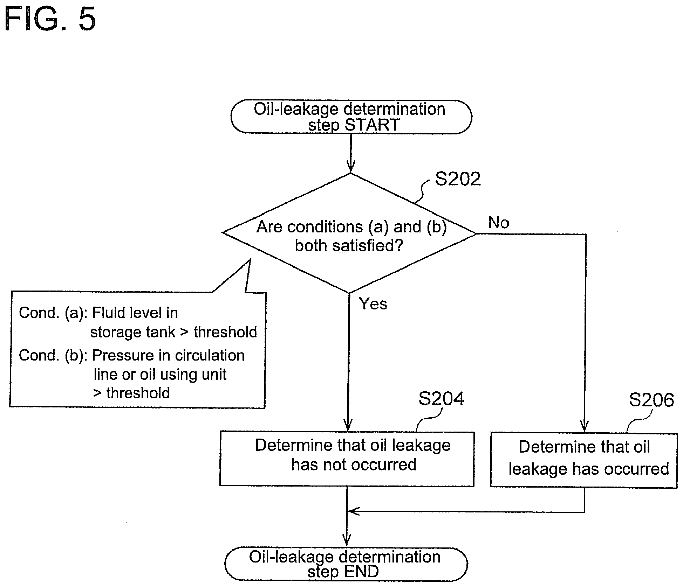

Subsequently, the oil-leakage determination step (S2) will be described in more detail. FIGs. 5 to 7 are each a flowchart of an oil-leakage determination step according to one embodiment.

In the oil-leakage determination step (S2) according to the embodiment illustrated in FIG. 5, the first oil-leakage determination condition including the following conditions (a) and (b) are used to determine whether oil-leakage from the oil-using unit has occurred.

Condition (a): the fluid level of the oil in the storage tank 12 is higher than a threshold value.

Condition (b): the pressure in the circulation line 14 is greater than a threshold value, or the pressure in the oil using unit 10 is greater than a threshold value.

More specifically, if both of the condition (a) and the condition (b) are satisfied (Yes in S202), it is determined that oil-leakage from the oil using unit 10 has not occurred (S204) and the oil-leakage determination step (S2) is terminated. In contrast, if any one of the condition (a) or the condition (b) is not satisfied (No in S202), it is determined that oil-leakage from the oil using unit 10 has occurred (S206), and the oil-leakage determination step (S2) is terminated.

In a case of the wind turbine generator 1 illustrated in FIG. 2, for the condition (a), the fluid level of the oil in the storage tank 12 for storing oil which is to be supplied to the speed-increasing gear 40 of the mechanical-type speed increasing unit 30A (10) may be compared to a threshold value. This fluid level may be obtained using a level meter 72 disposed on the storage tank 12. Further, for the condition (b), the pressure at the downstream side of the oil-supply pump 34 in the circulation line 14 through which oil to be supplied to the mechanical-type speed increasing unit 30A (10) flows using the oil-supply pump 34 from the storage tank 12 may be compared to a threshold value. This pressure may be obtained by a pressure sensor 74 disposed at the downstream side of the oil-supply pump 34 in the circulation line 14.

In a case of the wind turbine generator 1 illustrated in FIG. 3, for the condition (a), the fluid level of the oil in the storage tank 12 for storing oil which is to be supplied to the hydraulic transmission 30B (10) may be compared to a threshold value. This fluid level may be obtained using a level meter 82 disposed on the storage tank 12. Further, for the condition (b), the pressures in the high pressure line 54 and the low pressure line 56 through which the working oil flows in the hydraulic transmission 30B (10) may be compared to respective threshold values. These pressures may be obtained by a pressure sensor 84 disposed in the high pressure line 54 and a pressure sensor 86 disposed in the low pressure line 56.

If there is relatively rapid oil leakage having occurred in the oil using unit 10, an influence of the oil leakage appears as a pressure change in the circulation line 14 or in the oil using unit 10 including the high pressure line 54 and the low pressure line 56. That is, due to the influence of the rapid oil leakage, the pressure in the circulation line 14 or the oil using unit 10 becomes lower than a pressure predicted from the operation state of the oil using unit 10 (e.g. the transmission 30). Thus, it is possible to detect relatively rapid oil leakage by monitoring a pressure decrease in the circulation line 14 or the oil using unit 10 using the condition (b).

On the other hand, if the oil leakage is relatively slow, the magnitude of a pressure decrease in the circulation line 14 or the oil using unit 10 is small, and thus it may be impossible to detect the oil leakage with an adequate accuracy even if the pressure decrease in the circulation line 14 or the oil using unit 10 is monitored using the above condition (b). In view of this, as in the above configuration (1), the condition (a) is used in addition to the condition (b) to monitor the decrease in the fluid level in the storage tank 12 as well. If there is oil leakage in the oil using unit 10, the fluid level in the storage tank 12 becomes gradually lower than a fluid level predicted from the operation state of the oil using unit 10 (e.g. the transmission 30), which make it possible to detect relatively slow oil leakage by monitoring a fluid level using the condition (a).

Accordingly, using the condition (a) based on the fluid level of the storage tank 12 and the condition (b) based on the pressure in the circulation line 14 or the oil using unit 10, oil leakage is determined to have happened when any one of the conditions is not satisfied, which makes it possible to detect oil leakage securely and quickly.

In one embodiment, the oil-leakage determination step S2 may be executed using an oil-leakage detection part 102 included in the wind turbine generator 1.

In one embodiment, signals indicating a fluid level and a pressure may be sent to the oil-leakage detection part 102 from the level meter 72 or the pressure sensor 74 illustrated in FIG. 2, or the level meter 82, the pressure sensor 84 or the pressure sensor 86 illustrated in FIG. 3, the signals being obtained by the above sensors. Further, the oil-leakage detection part 102 may store a threshold value which is compared to a fluid level of the oil in the storage tank 12 for the condition (a), and a threshold value which is compared to a pressure in the circulation line 14 or the high pressure line 54 and the low pressure line 56 for the condition (b), so that it is determined whether each one of the condition (a) and the condition (b) is satisfied by comparing the threshold values stored in the oil-leakage detection part 102 to the measurement values of the fluid level and the pressures obtained by the sensors.

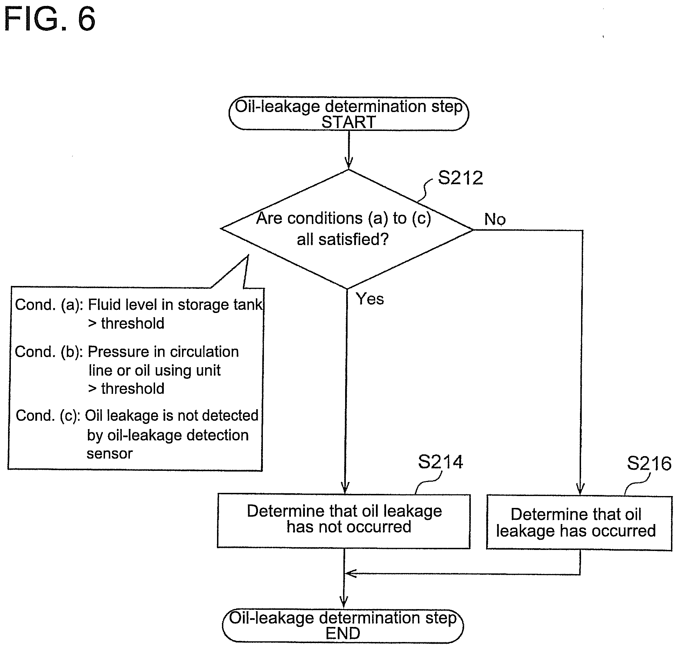

In the oil-leakage determination step (S2) according to the embodiment illustrated in FIG. 6, it is determined whether oil leakage from the oil using unit has occurred using the first oil-leakage determination condition that includes the following condition (c), in addition to the above conditions (a) and (b).

Condition (c): an oil-leakage detection signal is not outputted from an oil-leakage detection sensor 70a-70c disposed on the wind turbine generator 1.

More specifically, if all of the conditions (a) to (c) are satisfied (Yes in S212), it is determined that oil leakage from the oil using unit 10 has not occurred (S214), and the oil-leakage determination step (S2) is completed. On the other hand, if any one of the conditions (a) to (c) is not satisfied (No in S212), it is determined that oil leakage from the oil using unit 10 has occurred (S216), and the oil-leakage determination step (S2) is terminated.

With the conditions (a) and (b), oil-leakage from the oil using unit 10 is detected indirectly based on the measurement values obtained using the level meter or the pressure sensor. In contrast, with the condition (c), oil leakage from the oil using unit 10 is detected directly using the oil-leakage detection sensor 70a-70c which detects the existence of oil outside the system of the oil using unit 10 (i.e., which detects the oil leakage itself from the oil using unit 10).

In one embodiment, the oil-leakage detection sensor 70a-70c may be disposed at a position where the leakage oil from the oil using unit 10 may pool, the position being located at a lower part of the installation location of the oil using unit 10.

In one embodiment, as illustrated in FIG. 1, the oil-leakage detection sensor 70a-70c are configured to detect the leakage oil from the oil using unit 10 that is received by the oil pan 20a- 20c.

In one embodiment, as the oil-leakage detection sensor 70a-70c, an optical-fiber type oil-leakage detection sensor or a resistor-type oil-leakage detection sensor may be used.

An optical-fiber type oil-leakage sensor detects oil leakage utilizing, for instance, the decrease in the amount of light received by a light-receiving part due to leakage of light to the outside of the optical fiber at a section where the oil is adhering, the light being emitted from a light-emitting part to pass through the optical fiber. The leakage is caused by a difference in refraction index between the optical fiber and the oil.

A resistor-type oil-leakage detection sensor can detect oil leakage from, for instance, a change in an electrical resistance value of a sensor whose electrical resistance value changes when contacted by oil.

In one embodiment, a camera may be used as the oil-leakage detection sensor 70a-70c, the camera filming the inside or the like of the oil pan 20a-20c continuously, regularly, or at appropriate timings so that the existence of oil leakage is determined from the result of filming.

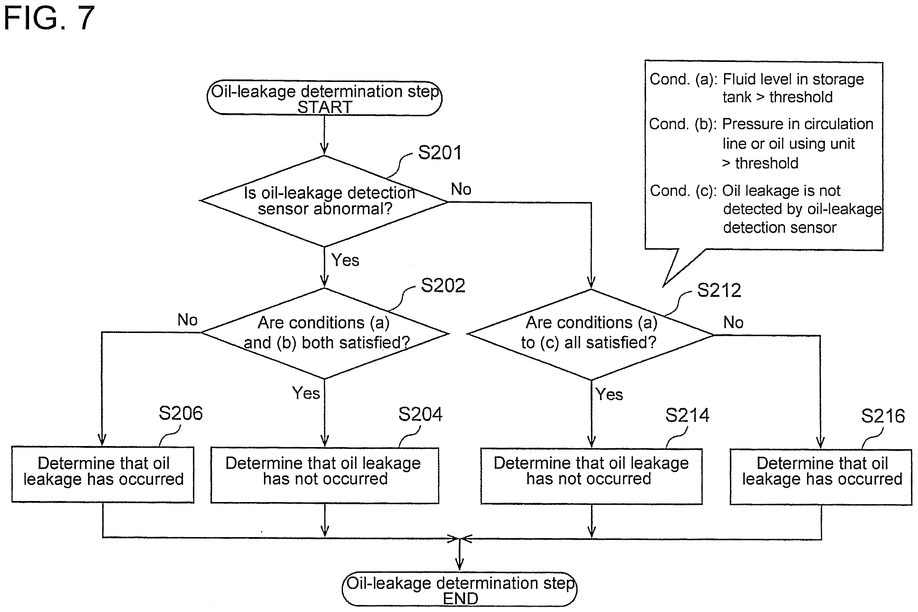

In the oil-leakage determination step (S2) according to the embodiment illustrated in FIG. 7, it is determined at first whether an abnormality of the oil-leakage detection sensor 70a-70c is present (S201).

If it is determined that there is an abnormality of the oil-leakage detection sensor 70a-70c in S201, (Yes in S201), it is determined whether oil leakage from the oil using unit 10 has occurred using the first oil-leakage determination condition which includes the conditions (a) and (b) but does not include the condition (c) (S202 to S206). Here, S202 to S206 are similar to those described using the flowchart of FIG. 5.

On the other hand, if it is determined that there is no abnormality of the oil-leakage detection sensor 70a-70c in S201 (No in S201), the first oil determination condition including the conditions (a) to (c) are used to determine whether oil leakage from the oil using unit 10 has occurred (S212 to S216). Here, S212 to S216 are similar to those described using the flowchart of FIG. 6.

In the oil-leakage determination step (S2) illustrated in FIG. 7, even if oil leakage is detected by the oil-leakage detection sensor 70a-70c based on the condition (c), it is not determined that oil leakage has occurred based on the condition (c) if an abnormality of the oil-leakage detection sensor 70a-70c is detected. Thus, it is possible not to shut down the wind turbine generator 1 and the auxiliary machine 22 when oil leakage is detected wrongly by the oil-leakage detection sensor 70a-70c having an abnormality, which enables stable operation of the wind turbine generator 1.

In the oil-leakage determination step S2 described with reference to FIGs. 5 to 7, for the conditions (a) and (b), the fluid level in the storage tank 12 and the pressure inside the circulation line 14 are compared to a threshold value to determine presence or absence of oil leakage from the oil using unit 10. Thus, the above threshold values need to be set in advance before execution of the oil-leakage determination step S2.

The threshold values may be appropriate values which are set on an empirical basis from past operation records of the wind turbine generator 1. Further, the setting values may be set for each operation (e.g. every time the wind turbine generator 1 is started) in accordance with the operation state of the wind turbine generator 1.

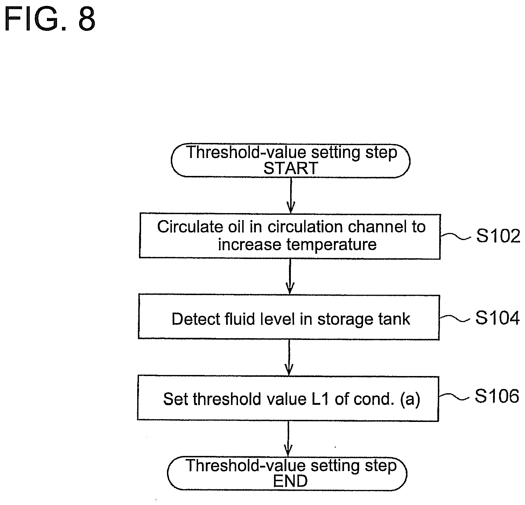

FIG. 8 is a flowchart of a method of setting a threshold value according to one embodiment. In one embodiment, in the wind turbine generator 1 including the hydraulic transmission 30B illustrated in FIG. 3, a threshold value which is to be compared to a fluid level in the storage tank 12 may be set according to the flow of setting a threshold value illustrated in FIG. 8, before execution of the oil-leakage determination step S2 (see FIG. 4).

In the flow illustrated in FIG. 8, firstly in the wind turbine generator 1, the hydraulic pump 50 is operated to circulate oil in a circulation path including the high pressure line 54, the bypass line 68 and the low pressure line 56, so that the temperature of the oil is increased to the predetermined value or higher (S102). When the oil is circulated in the circulation path, the valve 69 may be opened in a case where the valve 69 has been closed, so that the oil flows from the high pressure line 54 to the low pressure line 56 via the bypass line 68.

As a result of the circulation of the oil in the circulation path, thermal energy is generated due to the mechanical slide inside the hydraulic pump 50, the pressure decrease upon passage of oil through the oil, or the like, which increases the oil temperature. Further, the predetermined value of the oil temperature is, for instance, a temperature close to the oil temperature predicted during normal operation of the wind turbine generator 1 having the hydraulic transmission 30B, which is for instance 50 to 70°C.

After the oil temperature is increased to the predetermined value or higher in S102, the hydraulic pump 50 is stopped, and the fluid level of the oil after temperature rise in the storage tank 12 is detected while the oil is not circulated among the hydraulic pump 50, the hydraulic motor 52, the high pressure line 54 and the low pressure line 56 (S104).

Then, a threshold value L1 is determined with reference to the fluid level of the oil in the storage tank 12 detected in S104 (S106).

The threshold value L1 may be, for instance, a value obtained by subtracting a certain value from the fluid level of the oil in the storage tank 12 detected in S104. The certain value is determined in accordance with the model or the individuality of the wind turbine generator 1.

When the fluid level of the oil in the storage tank 12 is detected in S104, the hydraulic pump 50, the high pressure line 54, the hydraulic motor 52, the low pressure line 56 and the bypass line 68 are filled with oil. Thus, if the fluid level of the storage tank 12 is varied during normal operation of the wind turbine generator 1, the main cause may be considered to be accumulation of oil in a constituent unit other than the hydraulic pump 50 and the above other listed units included in the hydraulic transmission 30B. A constituent unit other than the hydraulic pump 50 and the other listed units included in the hydraulic transmission 30B may be, for instance, an accumulator disposed in the high pressure line 54 or the low pressure line 56. In this case, the threshold value L1 may be obtained by subtracting a certain value determined taking account of the capacity of the accumulator from the fluid level of the storage tank 12 detected in S104.

During operation of the hydraulic transmission 30B, the temperature of the oil (working oil) in the hydraulic transmission 30B rises due to thermal energy caused by mechanical slide in the hydraulic machine (the hydraulic pump 50 and the hydraulic motor 52), the pressure decrease upon passage of the working oil through the valve, or the like. Further, the volume of the oil increases with the temperature increase. Thus, as described above, it is possible to detect oil leakage more appropriately taking account of the volume increase of the oil due to the temperature rise, by setting a threshold value with reference to the fluid level in the storage tank 12 while the oil is heated to a temperature close to, for instance, the temperature during operation of the wind turbine generator 1.

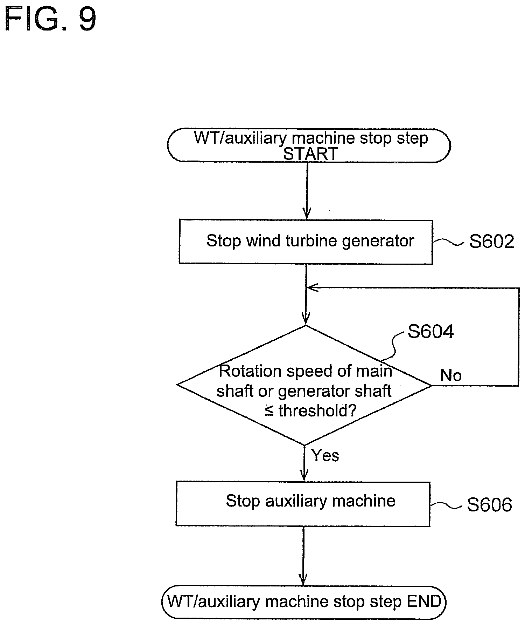

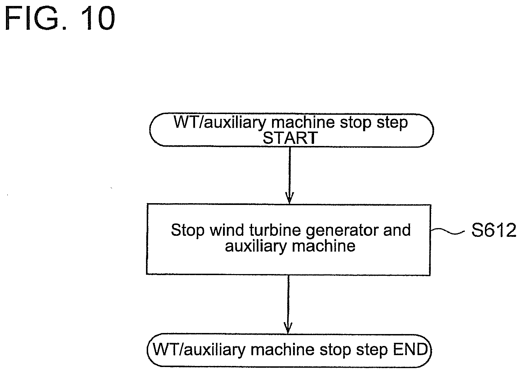

Next, the wind-turbine stop step and the auxiliary-machine stop step (S6) executed after detection of oil leakage in the oil-leakage determination step (S2) will be described in more detail. FIGs. 9 and 10 are each a flowchart of a wind-turbine stop step and an auxiliary-machine stop step according to one embodiment.

In the embodiment according to the flowchart illustrated in FIG. 9, the wind turbine generator 1 is stopped at first (the wind-turbine stop step), and the rotation speed of the main shaft 24 of the wind turbine generator 1 or of the generator shaft of the generator 6 is decreased. Then, after the rotation speed of the main shaft 24 or the generator shaft of the generator 6 has become the threshold value or less (Yes in S604), the auxiliary machine 22 is stopped (the auxiliary-machine stop step) (S606).

According to the steps S602 to S606, it is possible to supply the oil in the storage tank 12 to the oil using unit 10 with the auxiliary machine 22 until the rotation speed of the main shaft 24 or of the generator shaft of the generator 6 falls to the threshold value. Thus, it is possible to protect the oil using unit 10 from damage or the like due to lack of oil supply.

In one embodiment, if it is determined that oil leakage has occurred based on the first oil-leakage determination condition including the conditions (a) and (b) or the conditions (a) to (c) in accordance with the flow illustrated in one of FIGs. 5 to 7, the wind turbine generator 1 and the auxiliary machine 22 are stopped in accordance with the above steps S602 to S606.

In contrast, in the embodiment according to the flowchart illustrated in FIG. 10, after oil leakage is detected in the oil-leakage determination step (S2), the wind turbine generator 1 is stopped (the wind-turbine stop step) and the auxiliary machine 22 is stopped (the auxiliary-machine stop step) regardless of the rotation speed of the main shaft 24 or the generator shaft of the generator 6 (S612). That is, in S612, the auxiliary machine 22 is also stopped without waiting for the rotation speed of the main shaft 24 or the generator shaft of the generator 6 to decrease due to shutdown of the wind turbine generator 1.

According to the step S612, it is possible to reduce oil leakage after shutdown of the wind turbine generator 1 because oil is no longer supplied to the oil using unit 10 from the auxiliary machine 22.

To execute the wind-turbine stop step and the auxiliary-machine stop step (S6), the more appropriate one may be selected from the flows illustrated in FIGs. 9 and 10 in accordance with the determination condition and the threshold values used in the oil-leakage determination step (S2).

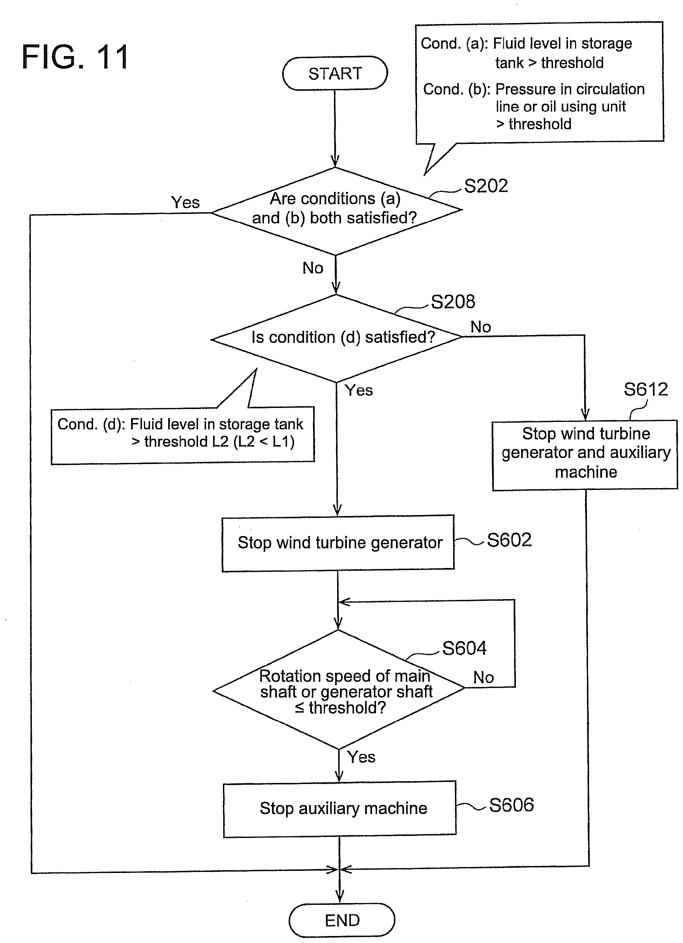

FIG. 11 is a flowchart of a method of operating a wind turbine generator according to one embodiment. In the flow illustrated in FIG. 11, it is firstly determined whether oil leakage from the oil using unit 10 has occurred, using the first oil-leakage determination condition including the above conditions (a) and (b) (S202). Here, the threshold value compared to the fluid level of the oil in the storage tank 12 for the condition (a) is referred to as L1. If both of the conditions (a) and (b) are satisfied in S202 (Yes in S202), it is determined that oil leakage from the oil using unit 10 has not occurred, and the procedure is terminated. In contrast, if any one of the condition (a) or (b) is not satisfied (No in S202), it is determined that oil leakage from the oil using unit 10 has occurred, and the procedure advances to the next step S208.

In S208, occurrence of oil leakage from the oil using unit 10 is determined based on the second oil-leakage determination condition including the following condition (d).

Condition (d): the fluid level of the oil in the storage tank 12 is greater than the threshold value L2 (L1>L2, where L1 is the threshold value of the fluid level in the condition (a) of the first oil-leakage determination condition).

In S208, if the condition (d) is satisfied (Yes in S208), it is determined that oil leakage from the oil using unit 10 is detected based on the first oil-leakage determination condition including the conditions (a) and (b), and the wind turbine stop step and the auxiliary-machine stop step are executed according to the above steps S602 to S606.

In contrast, in S208, if the condition (d) is not satisfied (No in S208), it is determined that oil leakage from the oil using unit 10 is detected based on the first oil-leakage determination condition including the conditions (a) and (b) and the second oil-leakage determination condition including the condition (d), and the wind turbine stop step and the auxiliary-machine stop step are performed according to the above step S612.

As described above, using the second oil-leakage determination condition, the auxiliary machine 22 is stopped without waiting for the rotation speed of the main shaft 24 or the generator shaft of the generator 6 to decrease if a larger volume of oil leakage is detected as compared to oil leakage that can be detected by the threshold value of the fluid level of the first oil-leakage determination condition. As a result, it is possible to reduce oil leakage after shutdown of the wind turbine generator 1.

In one embodiment, the first oil-leakage determination condition in S202 may include the condition (c) in addition to the above conditions (a) and (b), and oil leakage from the oil using unit 10 may be detected based on whether all of the conditions (a) to (c) are satisfied.

The method of stopping the wind turbine generator 1 in S602 or S612 is not particularly limited. In one embodiment, the wind turbine generator 1 may be stopped by controlling the pitch angle of the blade 2 so that the blade is feathered. When the pitch angle of the blade 2 is controlled so that the blade is feathered, aerodynamic braking force is applied to the wind turbine rotor 4, and it is possible to decrease the rotation speed of the wind turbine rotor 4.

Further, in one embodiment, the wind turbine generator 1 may be stopped by controlling the drivetrain 8 so that conversion of rotation energy of the wind turbine rotor 4 into electrical energy is halted.

In a case where the drivetrain 8 includes the hydraulic transmission 30B, the displacements of the hydraulic pump 50 and the hydraulic motor 52 may be controlled to stop the wind turbine generator 1. Conversion of rotation energy of the wind turbine rotor 4 into electrical energy may be halted by decreasing the displacement of each of the hydraulic pump 50 and the hydraulic motor 52 to decrease the speed of the hydraulic pump and the hydraulic motor.

In one embodiment, conversion of rotation energy of the wind turbine rotor 4 into electrical energy may be halted by decreasing the displacement of each of the hydraulic pump 50 and the hydraulic motor 52 to zero to decrease the speed of the hydraulic pump and the hydraulic motor.

Alternatively, in one embodiment, the wind turbine generator 1 may be stopped by halting conversion of rotation energy of the wind turbine rotor 4 into electrical energy by controlling the generator 6.

In a case where a wound-rotor induction generator is used as the generator 6, the energy conversion may be halted by controlling the variable resistance applied to the rotor winding and slip. For instance, the rotation speed of the generator may be brought closer to the synchronous speed to bring the generator output closer to zero, so that energy conversion is stopped.

Embodiments of the present invention were described in detail above, but the present invention is not limited thereto, and various amendments and modifications may be implemented within a scope that does not depart from the appended claims.

Herein, an expression of an equal state such as "same" "equal" and "uniform" shall not be construed as indicating only the state in which the feature is strictly equal, but also includes a state in which there is a tolerance or a difference that can still achieve the same function.

Further, an expression herein such as "comprise", "include", "have", "contain" and "constitute" are not intended to be exclusive of other components.

## Claims

1. A method of operating a wind turbine generator which includes a wind turbine rotor (4) including a hub (3) having a blade (2) mounted to the hub, a generator (6) configured to be driven by rotation energy of the wind turbine rotor (4), a drivetrain (8) for transmitting the rotation energy of the wind turbine rotor (4) to the generator (6), the drivetrain including at least one oil using unit (10), a storage tank for storing oil (12) supplied to the oil using unit (10), and a circulation line (14) through which oil circulated between the storage tank (12) and the oil using unit (10) flows, the method comprising:
an oil-leakage determination step (S2) of determining whether oil leakage from the oil using unit (10) has occurred, using a first oil-leakage determination condition including both of following conditions a) and b);
a wind-turbine stop step of stopping the wind turbine generator if it is determined that the oil leakage has occurred in the oil-leakage determination step (S2); and
an auxiliary-machine stop step of stopping an auxiliary machine (22) of the wind turbine generator if it is determined that the oil leakage has occurred in the oil-leakage determination step (S2),
wherein, in the oil-leakage determination step (S2), determination of condition satisfaction is carried out for each of conditions (a) and (b), and then it is determined that the oil leakage from the oil using unit has occurred if any one of the following condition a) or b) is not satisfied: condition a): a fluid level of the oil in the storage tank (12) is greater than a threshold value;
condition b): a pressure in the circulation line (14) is greater than a threshold value, or a pressure in the oil using unit (10) is greater than a threshold value, the method being **characterized in that**, if it is determined that the oil leakage has occurred according to the first oil-leakage determination condition in the oil-leakage determination step (S2), the auxiliary-machine stop step is executed after a rotation speed of the main shaft (24) of the wind turbine generator or of a generator shaft has decreased to a threshold value or less by executing the wind-turbine stop step.

2. The method of operating a wind turbine generator according to claim 1,
wherein, in the oil-leakage determination step (S2), using the first oil-leakage determination condition which further include a following condition c), it is determined that the oil leakage from the oil using unit (10) has occurred if any one of the condition a), b), or c) is not satisfied.
Condition c): an oil-leakage detection signal is not outputted from an oil-leakage detection sensor (70a-70c) disposed on the wind turbine generator.

3. The method of operating a wind turbine generator according to claim 2,
wherein the wind turbine generator further includes an oil pan (20a-20c) configured to receive leakage oil which has leaked from the oil using unit (10), and
wherein the oil-leakage detection sensor (70a-70b) is configured to detect the leakage oil received by the oil pan (20a-20c).

4. The method of operating a wind turbine generator according to claim 2 or 3,
wherein, in the oil-leakage determination step (S2), whether an abnormality of the oil-leakage detection sensor (70a-70c) is present is determined, and when the abnormality of the oil-leakage detection sensor (70a-70c) is detected, it is determined that the oil leakage from the oil using unit has not occurred if both of the conditions a) and b) are satisfied, even if the condition c) of the first oil-leakage determination condition is not satisfied.

5. The method of operating a wind turbine generator according to any one of claims 1 to 4,
wherein the drivetrain includes a main shaft (24) connected to the hub (3) of the wind turbine rotor, and a transmission (30) disposed between the main shaft (24) and the generator (6),
wherein the oil using unit (10) includes the transmission,
wherein the circulation line (14) includes an oil-supply line through which the oil supplied to the transmission from the storage tank (12) flows, and
wherein the auxiliary machine (22) includes an oil-supply pump for supplying the oil to the transmission from the storage tank (12), the oil-supply pump being disposed in the oil-supply line.

6. The method of operating a wind turbine generator according to claim 5,
wherein the transmission (30A) is a mechanical-type speed increasing unit which includes a speed-increasing gear (40) for increasing a rotation speed of the main shaft (24) and outputting the rotation to the generator (6), and a casing (42) for housing the speed-increasing gear (40),
wherein the storage tank (12) is formed inside the casing (42),
wherein the circulation line (14) is disposed outside the casing (42),
wherein the auxiliary machine includes an oil-supply pump (34) for supplying the oil stored in the storage tank (12) in the casing (42) to the speed-increasing gear (40) in the casing via the circulation line (14), and
wherein, in the oil-leakage determination step (S2), as the condition b), a condition that a pressure at a downstream side of the oil-supply pump (34) in the circulation line (14) is greater than a threshold value is used.

7. The method of operating a wind turbine generator according to claim 5,
wherein the transmission (30B) includes:
a hydraulic pump (50) configured to be driven by the main shaft (24) to pressurize working oil to produce pressurized oil;
a hydraulic motor (52) configured to be driven by the pressurized oil produced by the hydraulic pump (50);
a high pressure line (54) connecting an outlet side of the hydraulic pump (50) and an inlet side of the hydraulic motor (52); and
a low pressure line (56) connecting an outlet side of the hydraulic motor (52) and an inlet side of the hydraulic pump (50),
wherein the auxiliary machine includes a boost pump (62) for supplying the oil to the low pressure line (56) of the transmission from the storage tank (12), and
wherein, in the oil-leakage determination step (S2), as the condition b), a condition that a pressure in the high pressure line (54) is greater than a first threshold value and a pressure in the low pressure line (56) is greater than a second threshold value is used.

8. The method of operating a wind turbine generator according to claim 7,
wherein the transmission (30B) further includes a bypass line (68) for causing the oil in the high pressure line (54) to flow to the low pressure line (56) without passing through the hydraulic motor (52),
wherein the method further comprises:
an oil-temperature increasing step of increasing a temperature of the oil to a predetermined value or higher by operating the hydraulic pump (50) to circulate the oil in a circulation path which includes the high pressure line (54), the bypass line (68) and the low pressure line (56); and
a step of detecting the fluid level of the oil after a temperature rise in the storage tank, while the hydraulic pump (50) is stopped so that the oil is not circulated among the hydraulic pump (50), the hydraulic motor (52), the high pressure line (54) and the low pressure line (56), after the oil-temperature increasing step, and
wherein, in the oil-leakage determination step (S2), as the condition a), a condition that a fluid level of the oil in the storage tank (12) during operation of the wind turbine generator is higher than a threshold value L1 determined with reference to the fluid level of the oil detected after the temperature rise is used.

9. The method of operating a wind turbine generator according to any one of claims 1 to 8,
wherein, in the oil-leakage determination step (S2), a second oil-leakage condition including a following condition d) is used in addition to the first oil-leakage determination condition to determine that the oil leakage from the oil using unit has occurred if the condition d) is not satisfied,
wherein, if it is determined that the oil leakage has occurred according to the first oil-leakage determination condition in the oil-leakage determination step, the auxiliary-machine stop step is executed after the rotation speed of the main shaft (24) of the wind turbine generator or the generator shaft has decreased to a threshold value or less by executing the wind-turbine stop step, and
wherein, if it is determined that the oil leakage has occurred according to the second oil-leakage determination condition in the oil-leakage determination step, the auxiliary-machine stop step is executed with the wind-turbine stop step regardless of the rotation speed:
condition d): the fluid level of the oil in the storage tank (12) is greater than a threshold value L2, with L2 higher than L1, where L1 is the threshold value of the fluid level in the condition a) of the first oil-leakage determination condition.

10. The method of operating a wind turbine generator according to any one of claims 1 to 9,
wherein, in the wind-turbine stop step, a pitch angle of the blade (2) is controlled so that the blade is feathered.

11. The method of operating a wind turbine generator according to any one of claims 1 to 10,
wherein, in the wind-turbine stop step, at least one of the drivetrain (8) or the generator is controlled to stop conversion of the rotation energy into electrical energy.

12. A wind turbine generator comprising:
a wind turbine rotor (4) including a hub (3) having a blade (2) mounted to the hub (3);
a generator (6) configured to be driven by rotation energy of the wind turbine rotor (4);
a drivetrain (8) for transmitting the rotation energy of the wind turbine rotor (4) to the generator (6), the drivetrain (8) including at least one oil using unit (10);
a storage tank (12) for storing oil supplied to the oil using unit (10);
a circulation line (14) through which oil circulated between the storage tank (12) and the oil using unit (10) flows, and
an oil-leakage detection part (102) for detecting oil leakage from the oil using unit (10),
wherein the oil-leakage detection part (102) is configured to:
determine whether the oil leakage from the oil using unit (10) has occurred, using a first oil-leakage determination condition including both of following conditions a) and b); and
stop the wind turbine generator (6) and an auxiliary machine (22) of the wind turbine generator if it is determined that the oil leakage from the oil using unit (10) has occurred, and
wherein the oil-leakage detection part (102) is configured to carry out, for each of conditions (a) and (b), determination of condition satisfaction, and then determines that the oil leakage from the oil using unit has occurred if any one of the condition a) or b) is not satisfied:
condition a): a fluid level of the oil in the storage tank (12) is greater than a threshold value;
condition b): a pressure in the circulation line (14) is greater than a threshold value, or a pressure in the oil using unit (12) is greater than a threshold value, the wind turbine generator being **characterized in that**, if it is determined that the oil leakage has occurred according to the first oil-leakage determination condition, the oil-leakage detection part (102) is configured to stop the auxiliary machine after a rotation speed of the main shaft (24) of the wind turbine generator or of a generator shaft has decreased to a threshold value or less.

## Patentansprüche

1. Verfahren zum Betreiben einer Windkraftanlage, die einen Windturbinenrotor (4), der eine Nabe (3) umfasst, die ein Rotorblatt (2), das an der Nabe angebracht ist, aufweist, einen Generator (6), der dazu ausgebildet ist, durch Rotationsenergie des Windturbinenrotors (4) angetrieben zu werden, einen Antriebsstrang (8) zum Übertragen der Rotationsenergie des Windturbinenrotors (4) zu dem Generator (6), wobei der Antriebsstrang mindestens eine ölverwendende Einheit (10) umfasst, einen Vorratstank zum Aufnehmen von Öl (12), das der ölverwendenden Einheit (10) zugeführt wird, und eine Zirkulationsleitung (14), durch welche Öl strömt, das zwischen dem Vorratstank (12) und der ölverwendenden Einheit (10) umgewälzt wird, umfasst, wobei das Verfahren umfasst:
einen Ölaustrittsbestimmungsschritt (S2) zum Bestimmen, ob es zu einem Ölaustritt aus der ölverwendenden Einheit (10) gekommen ist, anhand einer ersten Ölaustrittsbestimmungsbedingung, die beide der folgenden Bedingungen a) und b) umfasst,
einen Windkraftanlagenstoppschritt zum Stoppen der Windkraftanlage, wenn in dem Ölaustrittsbestimmungsschritt (S2) bestimmt wird, dass es zu einem Ölaustritt gekommen ist, und
einen Hilfsmaschinenstoppschritt zum Stoppen einer Hilfsmaschine (22) der Windkraftanlage, wenn in dem Ölaustrittsbestimmungsschritt (S2) bestimmt wird, dass es zu einem Ölaustritt gekommen ist,
wobei in dem Ölaustrittsbestimmungsschritt (S2) die Bestimmung der Bedingungserfüllung für jede der Bedingungen (a) und (b) durchgeführt wird und dann bestimmt wird, dass es zu einem Ölaustritt aus der ölverwendenden Einheit gekommen ist, wenn eine beliebige der folgenden Bedingungen a) oder b) nicht erfüllt ist:
Bedingung a): ein Fluidpegel des Öls in dem Vorratstank (12) ist größer als ein Schwellenwert,
Bedingung b): ein Druck in der Zirkulationsleitung (14) ist größer als ein Schwellenwert, oder ein Druck in der ölverwendenden Einheit (10) ist größer als ein Schwellenwert, wobei das Verfahren **dadurch gekennzeichnet ist, dass**, wenn in dem Ölaustrittsbestimmungsschritt (S2) gemäß der ersten Ölaustrittsbestimmungsbedingung bestimmt wird, dass es zu einem Ölaustritt gekommen ist, der Hilfsmaschinenstoppschritt durchgeführt wird, nachdem eine Drehzahl der Hauptwelle (24) der Windkraftanlage oder einer Generatorwelle durch Durchführen des Windkraftanlagenstoppschritts auf einen Schwellenwert oder darunter gesunken ist.

2. Verfahren zum Betreiben einer Windkraftanlage nach Anspruch 1,
wobei in dem Ölaustrittsbestimmungsschritt (S2) anhand der ersten Ölaustrittsbestimmungsbedingung, die ferner eine folgende Bedingung c) umfasst, bestimmt wird, dass es zu einem Ölaustritt aus der ölverwendenden Einheit (10) gekommen ist, wenn eine beliebige der Bedingungen a), b) oder c) nicht erfüllt ist:
Bedingung c: von einem Ölaustrittsdetektiersensor (70a-70c), der an der Windkraftanlage angeordnet ist, wird kein Ölaustrittsdetektiersignal ausgegeben.

3. Verfahren zum Betreiben einer Windkraftanlage nach Anspruch 2,
wobei die Windkraftanlage ferner eine Ölwanne (20a-20c) umfasst, die dazu ausgebildet ist, austretendes Öl, das aus der ölverwendenden Einheit (10) ausgetreten ist, aufzunehmen, und
wobei der Ölaustrittsdetektiersensor (70a-70b) dazu ausgebildet ist, das ausgetretene Öl, das durch die Ölwanne (20a-20c) aufgenommen wird, zu detektieren.

4. Verfahren zum Betreiben einer Windkraftanlage nach Anspruch 2 oder 3,
wobei in dem Ölaustrittsbestimmungsschritt (S2) bestimmt wird, ob eine Abnormität des Ölaustrittsdetektiersensors (70a-70c) vorliegt, und falls die Abnormität des Ölaustrittsdetektiersensors (70a-70c) detektiert wird, bestimmt wird, dass es nicht zu einem Ölaustritt aus der ölverwendenden Einheit gekommen ist, wenn beide der Bedingungen a) und b) erfüllt sind, selbst wenn die Bedingung c) der ersten Ölaustrittsbestimmungsbedingung nicht erfüllt ist.

5. Verfahren zum Betreiben einer Windkraftanlage nach einem beliebigen der Ansprüche 1 bis 4,
wobei der Antriebsstrang eine Hauptwelle (24), die mit der Nabe (3) des Windkraftanlagenrotors verbunden ist, und ein Getriebe (30), das zwischen der Hauptwelle (24) und dem Generator (6) angeordnet ist, umfasst,
wobei die ölverwendende Einheit (10) das Getriebe umfasst,
wobei die Zirkulationsleitung (14) eine Ölzufuhrleitung umfasst, durch welche das Öl, das dem Getriebe aus dem Vorratstank (12) zugeführt wird, strömt, und
wobei die Hilfsmaschine (22) eine Ölzufuhrpumpe zum Zuführen des Öls aus dem Vorratstank (12) zu dem Getriebe umfasst, wobei die Ölzufuhrpumpe in der Ölzufuhrleitung angeordnet ist.

6. Verfahren zum Betreiben einer Windkraftanlage nach Anspruch 5,
wobei das Getriebe (30A) eine drehzahlerhöhende Einheit vom mechanischen Typ ist, die ein drehzahlerhöhendes Getriebe (40) zum Erhöhen einer Drehzahl der Hauptwelle (24) und Ausgeben der Drehung an den Generator (6) und ein Gehäuse (42) zum Aufnehmen des drehzahlerhöhenden Getriebes (40) umfasst,
wobei der Vorratstank (12) innerhalb des Gehäuses (42) ausgebildet ist,
wobei die Zirkulationsleitung (14) außerhalb des Gehäuses (42) angeordnet ist,
wobei die Hilfsmaschine eine Ölzufuhrpumpe (34) zum Zuführen des Öls, das in dem Vorratstank (12) in dem Gehäuse (42) gespeichert ist, zu dem drehzahlerhöhenden Getriebe (40) in dem Gehäuse über die Zirkulationsleitung (14) umfasst, und
wobei in dem Ölaustrittsbestimmungsschritt (S2) als Bedingung b) eine Bedingung verwendet wird, dass ein Druck auf einer stromabwärtigen Seite der Ölzufuhrpumpe (34) in der Zirkulationsleitung (14) größer als ein Schwellenwert ist.

7. Verfahren zum Betreiben einer Windkraftanlage nach Anspruch 5,
wobei das Getriebe (30B) umfasst:
eine Hydraulikpumpe (50), die dazu ausgebildet ist, durch die Hauptwelle (24) angetrieben zu werden, um Arbeitsöl unter Druck zu setzen, um Drucköl zu erzeugen,
einen Hydraulikmotor (52), der dazu ausgebildet ist, durch das Drucköl, das durch die Hydraulikpumpe (50) erzeugt wird, angetrieben zu werden,
eine Hochdruckleitung (54), die eine Auslassseite der Hydraulikpumpe (50) und eine Einlassseite des Hydraulikmotors (52) verbindet, und
eine Niederdruckleitung (56), die eine Auslassseite des Hydraulikmotors (52) und eine Einlassseite der Hydraulikpumpe (50) verbindet,
wobei die Hilfsmaschine eine Speisepumpe (62) zum Zuführen des Öls aus dem Vorratstank (12) zu der Niederdruckleitung (56) des Getriebes umfasst, und
wobei in dem Ölaustrittsbestimmungsschritt (S2) als Bedingung b) eine Bedingung verwendet wird, dass ein Druck in der Hochdruckleitung (54) größer als ein erster Schwellenwert ist und ein Druck in der Niederdruckleitung (56) größer als ein zweiter Schwellenwert ist.

8. Verfahren zum Betreiben einer Windkraftanlage nach Anspruch 7,
wobei das Getriebe (30B) ferner eine Bypass-Leitung (68) zum Bewirken, dass das Öl in der Hochdruckleitung (54) zu der Niederdruckleitung (56) strömt, ohne durch den Hydraulikmotor (52) geführt zu werden, umfasst,
wobei das Verfahren ferner umfasst:
einen Öltemperaturerhöhungsschritt zum Erhöhen einer Temperatur des Öls auf einen vorgegebenen Wert oder höher durch Betreiben der Hydraulikpumpe (50), um das Öl in einem Zirkulationsweg, der die Hochdruckleitung (54), die Bypass-Leitung (68) und die Niederdruckleitung (56) umfasst, umzuwälzen, und
einen Schritt zum Detektieren des Fluidpegels des Öls nach einem Temperaturanstieg in dem Vorratstank, während die Hydraulikpumpe (50) gestoppt ist, so dass das Öl nicht zwischen der Hydraulikpumpe (50), dem Hydraulikmotor (52), der Hochdruckleitung (54) und der Niederdruckleitung (56) umgewälzt wird, nach dem Öltemperaturerhöhungsschritt, und
wobei in dem Ölaustrittsbestimmungsschritt (S2) als Bedingung a) eine Bedingung verwendet wird, dass ein Fluidpegel des Öls in dem Vorratstank (12) während des Betriebs der Windkraftanlage höher als ein Schwellenwert L1 ist, der in Bezug auf den nach dem Temperaturanstieg detektierten Fluidpegel des Öls bestimmt wird.

9. Verfahren zum Betreiben einer Windkraftanlage nach einem beliebigen der Ansprüche 1 bis 8, wobei in dem Ölaustrittsbestimmungsschritt (S2) eine zweite Ölaustrittsbedingung, die eine folgende Bedingung d) umfasst, zusätzlich zu der ersten Ölaustrittsbestimmungsbedingung verwendet wird, um zu bestimmen, dass es zu dem Ölaustritt aus der ölverwendenden Einheit gekommen ist, wenn die Bedingung d) nicht erfüllt ist,
wobei, wenn in dem Ölaustrittsbestimmungsschritt gemäß der ersten Ölaustrittsbestimmungsbedingung bestimmt wird, dass es zu dem Ölaustritt gekommen ist, der Hilfsmaschinenstoppschritt durchgeführt wird, nachdem die Drehzahl der Hauptwelle (24) der Windkraftanlage oder der Generatorwelle durch Durchführen des Windkraftanlagenstoppschritts auf einen Schwellenwert oder darunter gesunken ist, und
wobei, wenn in dem Ölaustrittsbestimmungsschritt gemäß der zweiten Ölaustrittsbestimmungsbedingung bestimmt wird, dass es zu dem Ölaustritt gekommen ist, der Hilfsmaschinenstoppschritt mit dem Windkraftanlagenstoppschritt unabhängig von der Drehzahl durchgeführt wird:
Bedingung d): der Fluidpegel des Öls in dem Vorratstank (12) ist größer als ein Schwellenwert L2, wobei L2 größer als L1 ist, wobei L1 der Schwellenwert des Fluidpegels in der Bedingung a) der ersten Ölaustrittsbestimmungsbedingung ist.

10. Verfahren zum Betreiben einer Windkraftanlage nach einem beliebigen der Ansprüche 1 bis 9,
wobei in dem Windkraftanlagenstoppschritt ein Pitch-Winkel des Rotorblatts (2) derart geregelt wird, dass das Rotorblatt in Fahnenstellung gebracht wird.

11. Verfahren zum Betreiben einer Windkraftanlage nach einem beliebigen der Ansprüche 1 bis 10,
wobei in dem Windkraftanlagenstoppschritt mindestens einer aus der Gruppe umfassend den Antriebsstrang (8) und den Generator geregelt wird, um die Umwandlung der Rotationsenergie in elektrische Energie zu stoppen.

12. Windkraftanlage, umfassend:
einen Windturbinenrotor (4), der eine Nabe (3) umfasst, die ein Rotorblatt (2), das an der Nabe angebracht ist, aufweist,
einen Generator (6), der dazu ausgebildet ist, durch Rotationsenergie des Windturbinenrotors (4) angetrieben zu werden,
einen Antriebsstrang (8) zum Übertragen der Rotationsenergie des Windturbinenrotors (4) zu dem Generator (6), wobei der Antriebsstrang (8) mindestens eine ölverwendende Einheit (10) umfasst,
einen Vorratstank zum Aufnehmen von Öl (12), das der ölverwendenden Einheit (10) zugeführt wird,
eine Zirkulationsleitung (14), durch die Öl strömt, das zwischen dem Vorratstank (12) und der ölverwendenden Einheit (10) umgewälzt wird, und
einen Ölaustrittsdetektierteil (102) zum Detektieren eines Ölaustritts aus der ölverwendenden Einheit (10),
wobei der Ölaustrittsdetektierteil (102) dazu ausgebildet ist:
anhand einer ersten Ölaustrittsbestimmungsbedingung, die beide der folgenden Bedingungen a) und b) umfasst, zu bestimmen, ob es zu dem Ölaustritt aus der ölverwendenden Einheit (10) gekommen ist, und
die Windkraftanlage (6) und eine Hilfsmaschine (22) der Windkraftanlage zu stoppen, wenn bestimmt wird, dass es zu dem Ölaustritt aus der ölverwendenden Einheit (10) gekommen ist, und
wobei der Ölaustrittsdetektierteil (102) dazu ausgebildet ist, für jede der Bedingungen (a) und (b) eine Bedingungserfüllungsbestimmung durchzuführen, und dann bestimmt, dass es zu dem Ölaustritt aus der ölverwendenden Einheit gekommen ist, wenn eine beliebige der Bedingungen a) oder b) nicht erfüllt ist:
Bedingung a): ein Fluidpegel des Öls in dem Vorratstank (12) ist größer als ein Schwellenwert,
Bedingung b): ein Druck in der Zirkulationsleitung (14) ist größer als ein Schwellenwert, oder ein Druck in der ölverwendenden Einheit (12) ist größer als ein Schwellenwert, wobei die Windkraftanlage **dadurch gekennzeichnet ist, dass**, wenn gemäß der ersten Ölaustrittsbestimmungsbedingung bestimmt wird, dass es zu dem Ölaustritt gekommen ist, der Ölaustrittsdetektierteil (102) dazu ausgebildet ist, die Hilfsmaschine zu stoppen, nachdem eine Drehzahl der Hauptwelle (24) der Windkraftanlage oder einer Generatorwelle auf einen Schwellenwert oder darunter gesunken ist.

## Revendications

1. Procédé de mise en oeuvre d'une éolienne qui comprend un rotor d'éolienne (4) comprenant un moyeu (3) ayant une pale (2) montée sur le moyeu, une génératrice (6) configurée pour être entraîné par une énergie de rotation du rotor d'éolienne (4), un train d'entraînement (8) destiné à transmettre l'énergie de rotation du rotor d'éolienne (4) à la génératrice (6), le train d'entraînement comprenant au moins une unité utilisant de l'huile (10), un réservoir de stockage destiné à stocker de l'huile (12) délivrée à l'unité utilisant de l'huile (10), et une ligne de circulation (14) à travers laquelle de l'huile ayant circulé entre le réservoir de stockage (12) et l'unité utilisant de l'huile (10) s'écoule, le procédé comportant :
une étape de détermination de fuite d'huile (S2) destinée à déterminer si une fuite d'huile de l'unité utilisant de l'huile (10) s'est produite, en utilisant une première condition de détermination de fuite d'huile comprenant chacune des deux conditions suivantes a) et b) ;
une étape d'arrêt d'éolienne destinée à arrêter l'éolienne si l'on détermine que la fuite d'huile s'est produite dans l'étape de détermination de fuite d'huile (S2) ; et
une étape d'arrêt de machine auxiliaire destinée à arrêter une machine auxiliaire (22) de l'éolienne si l'on détermine que la fuite d'huile s'est produite dans l'étape de détermination de fuite d'huile (S2),
selon lequel, dans l'étape de détermination de fuite d'huile (S2), une détermination de satisfaction de condition est réalisée pour chacune des conditions (a) et (b), et on détermine alors que la fuite d'huile de l'unité utilisant de l'huile s'est produite si l'une quelconque de la condition suivante a) ou b) n'est pas satisfaite : condition a) : un niveau de fluide de l'huile dans le réservoir de stockage (12) est plus grand qu'une valeur de seuil ;
condition b) : une pression dans la ligne de circulation (14) est plus grande qu'une valeur de seuil, ou une pression dans l'unité utilisant de l'huile (10) est plus grande qu'une valeur de seuil, le procédé étant **caractérisé en ce que**, si l'on détermine que la fuite d'huile s'est produite selon la première condition de détermination de fuite d'huile dans l'étape de détermination de fuite d'huile (S2), l'étape d'arrêt de machine auxiliaire est exécutée après qu'une vitesse de rotation de l'arbre principal (24) de l'éolienne ou d'un arbre de génératrice a diminué jusqu'à une valeur de seuil ou moins en exécutant l'étape d'arrêt d'éolienne.

2. Procédé de mise en oeuvre d'une éolienne selon la revendication 1,
selon, dans l'étape de détermination de fuite d'huile (S2), en utilisant la première condition de détermination de fuite d'huile qui comprend en outre une condition suivante c), on détermine que la fuite d'huile de l'unité utilisant de l'huile (10) s'est produite si l'une quelconque de la condition a), b), ou c) n'est pas satisfaite.
Condition c) : un signal de détection de fuite d'huile n'est pas délivré par un capteur de détection de fuite d'huile (70a à 70c) disposé sur l'éolienne.

3. Procédé de mise en oeuvre d'une éolienne selon la revendication 2,
selon lequel l'éolienne comprend en outre un bac à huile (20a à 20c) configuré pour recevoir de l'huile de fuite qui a fui de l'unité utilisant de l'huile (10), et
selon lequel le capteur de détection de fuite d'huile (70a à 70b) est configuré pour détecter l'huile de fuite reçue par le bac à huile (20a à 20c).

4. Procédé de mise en oeuvre d'une éolienne selon la revendication 2 ou 3,
selon lequel, dans l'étape de détermination de fuite d'huile (S2), si le fait qu'une une anomalie du capteur de détection de fuite d'huile (70a à 70c) est présente est déterminé, et quand l'anomalie du capteur de détection de fuite d'huile (70a à 70c) est détectée, on détermine que la fuite d'huile de l'unité utilisant de l'huile ne s'est pas produite si les deux conditions a) et b) sont satisfaites, même si la condition c) de la première condition de détermination de fuite d'huile n'est pas satisfaite.

5. Procédé de mise en oeuvre d'une éolienne selon l'une quelconque des revendications 1 à 4,
selon lequel le train d'entraînement comprend un arbre principal (24) relié au moyeu (3) du rotor d'éolienne, et une transmission (30) disposée entre l'arbre principal (24) et la génératrice (6),
selon lequel l'unité utilisant de l'huile (10) comprend la transmission,
selon lequel la ligne de circulation (14) comprend une ligne d'alimentation en huile à travers laquelle s'écoule l'huile délivrée à la transmission à partir du réservoir de stockage (12), et
selon lequel la machine auxiliaire (22) comprend une pompe d'alimentation en huile destinée à délivrer l'huile à la transmission à partir du réservoir de stockage (12), la pompe d'alimentation en huile étant disposée dans la ligne d'alimentation en huile.

6. Procédé de mise en oeuvre d'une éolienne selon la revendication 5,
selon lequel la transmission (30A) est une unité d'augmentation de vitesse de type mécanique qui comprend un pignon d'augmentation de vitesse (40) destiné à augmenter une vitesse de rotation de l'arbre principal (24) et à délivrer la rotation à la génératrice (6), et un boîtier (42) destiné à loger le pignon d'augmentation de vitesse (40),
selon lequel le réservoir de stockage (12) est formé à l'intérieur du boîtier (42),
selon lequel la ligne de circulation (14) est disposée à l'extérieur du boîtier (42),
selon lequel la machine auxiliaire comprend une pompe d'alimentation en huile (34) destinée à délivrer l'huile stockée dans le réservoir de stockage (12) dans le boîtier (42) au pignon d'augmentation de vitesse (40) dans le boîtier par l'intermédiaire de la ligne de circulation (14), et
selon lequel, dans l'étape de détermination de fuite d'huile (S2), comme condition b), une condition selon laquelle une pression sur un côté en aval de la pompe d'alimentation en huile (34) dans la ligne de circulation (14) est plus grande qu'une valeur de seuil est utilisée.

7. Procédé de mise en oeuvre d'une éolienne selon la revendication 5,
selon lequel la transmission (30B) comprend :
une pompe hydraulique (50) configurée pour être entraînée par l'arbre principal (24) pour mettre en pression l'huile de travail pour produire de l'huile sous pression ;
un moteur hydraulique (52) configuré pour être entraîné par l'huile sous pression produite par la pompe hydraulique (50) ;
une ligne à haute pression (54) reliant un côté de sortie de la pompe hydraulique (50) et un côté d'entrée du moteur hydraulique (52) ; et
une ligne à basse pression (56) reliant un côté de sortie du moteur hydraulique (52) et un côté d'entrée de la pompe hydraulique (50),
selon lequel la machine auxiliaire comprend une pompe auxiliaire de gavage (62) destinée à délivrer l'huile à la ligne à basse pression (56) de la transmission à partir du réservoir de stockage (12), et
selon lequel, dans l'étape de détermination de fuite d'huile (S2), comme condition b), une condition selon laquelle une pression dans la ligne à haute pression (54) est plus grande qu'une première valeur de seuil et une pression dans la ligne à basse pression (56) est plus grande qu'une deuxième valeur de seuil est utilisée.

8. Procédé de mise en oeuvre d'une éolienne selon la revendication 7,
selon lequel la transmission (30B) comprend en outre une ligne de dérivation (68) pour amener l'huile dans la ligne à haute pression (54) à s'écouler dans la ligne à basse pression (56) sans passer par le moteur hydraulique (52),
selon lequel le procédé comporte en outre :
une étape d'augmentation de température d'huile destinée à augmenter une température d'huile à une valeur prédéterminée ou plus en actionnant la pompe hydraulique (50) pour faire circuler l'huile dans un passage de circulation qui comprend la ligne à haute pression (54), la ligne de dérivation (68) et la ligne à basse pression (56) ; et
une étape de détection du niveau de fluide de l'huile après une élévation de température dans le réservoir de stockage, alors que la pompe hydraulique (50) est arrêtée de telle sorte que l'huile n'est pas amenée à circuler parmi la pompe hydraulique (50), le moteur hydraulique (52), la ligne à haute pression (54) et la ligne à basse pression (56), après l'étape d'augmentation de température d'huile, et
selon lequel, dans l'étape de détermination de fuite d'huile (S2), comme condition a), une condition selon laquelle un niveau de fluide de l'huile dans le réservoir de stockage (12) lors du fonctionnement de l'éolienne est plus haut qu'une valeur de seuil L1 déterminée en se référant au niveau de fluide de l'huile détectée après l'élévation de température est utilisée.

9. Procédé de mise en oeuvre d'une éolienne selon l'une quelconque des revendications 1 à 8,
selon lequel, dans l'étape de détermination de fuite d'huile (S2), une deuxième condition de fuite d'huile comprenant une condition suivante d) est utilisée en plus de la première condition de détermination de fuite d'huile pour déterminer que la fuite d'huile de l'unité utilisant de l'huile s'est produite si la condition d) n'est pas satisfaite,
selon lequel, si l'on détermine que la fuite d'huile s'est produite selon la première condition de détermination de fuite d'huile dans l'étape de détermination de fuite d'huile, l'étape d'arrêt de machine auxiliaire est exécutée une fois que la vitesse de rotation de l'arbre principal (24) de l'éolienne ou de l'arbre de génératrice a diminué à une valeur de seuil ou moins en exécutant l'étape d'arrêt d'éolienne, et
selon lequel, si l'on détermine que la fuite d'huile s'est produite selon la deuxième condition de détermination de fuite d'huile dans l'étape de détermination de fuite d'huile, l'étape d'arrêt de machine auxiliaire est exécutée avec l'étape d'arrêt d'éolienne indépendamment de la vitesse de rotation :
condition d) : le niveau de fluide de l'huile dans le réservoir de stockage (12) est plus grand qu'une valeur de seuil L2, avec L2 plus grand que L1, où L1 est la valeur de seuil du niveau de fluide dans la condition a) de la première condition de détermination de fuite d'huile.

10. Procédé de mise en oeuvre d'une éolienne selon l'une quelconque des revendications 1 à 9,
selon lequel, dans l'étape d'arrêt d'éolienne, un angle de pas de la pale (2) est commandé de telle sorte que la pale est mise en drapeau.

11. Procédé de mise en oeuvre d'une éolienne selon l'une quelconque des revendications 1 à 10,
selon lequel, dans l'étape d'arrêt d'éolienne, au moins une de le train d'entraînement (8) ou de la génératrice est commandée pour arrêter une conversion de l'énergie de rotation en énergie électrique.

12. Eolienne comportant :
un rotor d'éolienne (4) comprenant un moyeu (3) ayant une pale (2) montée sur le moyeu (3) ;
une génératrice (6) configurée pour être entraînée par une énergie de rotation du rotor d'éolienne (4) ;
un train d'entraînement (8) destiné à transmettre l'énergie de rotation du rotor d'éolienne (4) à la génératrice (6), le train d'entraînement (8) incluant au moins une unité utilisant de l'huile (10) ;
un réservoir de stockage (12) destiné à stocker de l'huile délivrée à l'unité utilisant de l'huile (10) ;
une ligne de circulation (14) à travers laquelle de l'huile ayant circulé entre le réservoir de stockage (12) et l'unité utilisant de l'huile (10) s'écoule, et
une partie de détection de fuite d'huile (102) destinée à détecter une fuite d'huile de l'unité utilisant de l'huile (10),
dans laquelle la partie de détection de fuite d'huile (102) est configurée pour :
déterminer si la fuite d'huile de l'unité utilisant de l'huile (10) s'est produite, en utilisant une première condition de détermination de fuite d'huile comprenant les deux conditions suivantes a) et b) ; et
arrêter l'éolienne (6) et une machine auxiliaire (22) de l'éolienne si l'on détermine que la fuite d'huile de l'unité utilisant de l'huile (10) s'est produite, et
dans laquelle la partie de détection de fuite d'huile (102) est configurée pour réaliser, pour chacune des conditions (a) et (b), une détermination de satisfaction de condition, et détermine ensuite que la fuite d'huile de l'unité utilisant de l'huile s'est produite si l'une quelconque de la condition a) ou b) n'est pas satisfaite :
condition a) : un niveau de fluide de l'huile dans le réservoir de stockage (12) est plus grand qu'une valeur de seuil ;
condition b) : une pression dans la ligne de circulation (14) est plus grande qu'une valeur de seuil, ou une pression dans l'unité utilisant de l'huile (12) est plus grande qu'une valeur de seuil, l'éolienne étant **caractérisée en ce que**, si l'on détermine que la fuite d'huile s'est produite selon la première condition de détermination de fuite d'huile, la partie de détection de fuite d'huile (102) est configurée pour arrêter la machine auxiliaire une fois qu'une vitesse de rotation de l'arbre principal (24) de l'éolienne ou d'un arbre de génératrice a diminué à une valeur de seuil ou moins.
